# EUROPÄISCHE PATENTSCHRIFT

(11) **EP 0 604 696 B1**
(45) Veröffentlichungstag und Bekanntmachung des Hinweises auf die Patenterteilung: **09.09.1998**
(21) Anmeldenummer: 92811030.3
(22) Anmeldetag: 31.12.1992
(51) Int. Cl.: F16B 12/24, F16B 19/00

(54) **Befestigungselement**
Fastener element
Dispositif de fixation

(43) Veröffentlichungstag der Anmeldung: 06.07.1994
(73) Patentinhaber: CONFAST TECHNOLOGIES LIMITED, Dublin 2 (IE)
(72) Erfinder: Barandun, Heinz Peter, CH-8044 Zürich (CH)
(74) Vertreter: AMMANN PATENTANWAELTE AG BERN

(56) Entgegenhaltungen:
- BE-A- 870 008
- CH-A- 227 212
- DE-A- 1 817 135
- DE-C- 623 064
- US-A- 1 354 549
- US-A- 3 352 191
- US-A- 4 922 587

## Beschreibung

Die vorliegende Erfindung bezieht sich auf eine Verbindung, bestehend aus einem Befestigungselement und mehreren zu verbindenden Teilen gemäss Oberbegriff von Anspruch 1, wobei diese Teile beispielsweise verschiedene Metall- und/oder Kunststoffteile von Möbelstücken oder Holzplatten, oder im Bauwesen ein Brett und eine Betonunterlage oder andere miteinander zu befestigende Teile sein können.

Ein Befestigungselement mit Merkmalen von Patentanspruch 1 ist in der älteren, am 17.02.1994 veröffentlichten internationalen Anmeldung WO-A-94/03735, des gleichen Erfinders, offenbart, doch richtet sich diese Anmeldung ausschliesslich auf ein elektrisch anschweissbares Befestigungselement, während die vorliegende Verbindung ein nicht anzuschweissendes Befestigungselement aufweist. In dem ganzen Dokument ist nirgends offenbart, dass dieses Element auch zum Verbinden von oben angegebenen Teilen dienen soll.

Ein Befestigungselement gemäss Oberbegriff von Patentanspruch 1 ist beispielsweise in der CH-A-227 212 in der Form eines Befestigungsteils für ein Kettengelenk offenbart, das ohne Vorspannung in das Kettengelenk eingeschoben wird und in das zwecks Verstärkung der Rückhaltekraft ein Innenhohlkörper hineingetrieben wird. Ein solches Element kann jedoch nicht zur drehfesten Verbindung von zwei Teilen wie Platten oder dergl. verwendet werden.

Ausserdem ist in der US-A-3 352 191 oder US-A-1 254 540 eine federnde Hülse mit Längsschlitz beschrieben, wobei in der Hülsenwand Widerhaken in Form von herausgeschlagenen Dreiecken offenbart sind.

In der DE-C-623 064 ist ein Befestigungselement beschrieben, das als Beschlagteil ausgebildet ist und senkrecht zur Mittelachse herausstehende Ränder aufweist, die mittels eines Dornes in das umliegende Holz getrieben werden.

Aus der BE-B-870008 ist ferner ein Dübel bekannt, der einen Längsschnitt aufweist und entweder im Innern einstückig geformte, nach aussen wirkende Mittel zum Verstärken der Spannkraft aufweist oder einen Stift benötigt, der in das Innere des Dübels getrieben wird, um ihn auseinander zu spreizen. Die Aussenwand des Dübels ist mit Rückhaltemitteln versehen.

Solche Elemente haben jeweils einen begrenzten, spezifischen Anwendungsbereich und sind daher nicht für die allgemeine Verbindung von Teilen, beispielsweise Platten, geeignet, da sie vor allem eine relativ geringe eigene Rückhaltekraft aufweisen.

Es ist von diesem Stand der Technik ausgehend Aufgabe der vorliegenden Erfindung eine Verbindung mit einem Befestigungselement anzugeben, bei der auch relativ komplizierte Teile einfach und drehfest miteinander verbunden werden können, ohne dass ein Verleimen oder Vernieten notwendig ist. Diese Aufgabe wird mit einer im unabhängigen Anspruch 1 definierten Verbindung mit einem Befestigungselement gelöst. Dadurch ist eine im wesentlichen einschnappbare, für viele Anwendungszwecke genügende, feste Verbindung zwischen zwei Teilen, beispielsweise Holz- oder Kunststoffplatten, möglich. In den Verwendungsansprüchen sind Anordnungen zur Befestigung von Teilen definiert, während die abhängigen Ansprüche vorteilhafte Weiterentwicklungen beschreiben.

Die Erfindung wird im folgenden anhand einer Zeichnung von Ausführungsbeispielen näher erläutert.
Figur 1 zeigt in perspektivischer Sicht ein erfindungsgemässes Befestigungselement,
Figur 2 zeigt im Schnitt eine Verwendung des Befestigungselementes von Figur 1,
Figur 3 zeigt im Schnitt die Verwendung einer Ausführungsvariante des Befestigungselementes von Figur 1,
Figur 4 zeigt im Schnitt eine Verwendung eines weiteren Ausführungsbeispiels eines Befestigungselementes,
Figur 5 zeigt eine Ausführungsvariante des Befestigungselementes von Figur 4,
Figur 6 zeigt eine Ausführungsvariante eines Befestigungselementes gemäss den Figuren 1 bis 3,
Figur 7 zeigt eine Befestigungsart eines Befestigungselementes mittels eines lösbaren Spreizstiftes,
die Figuren 8 und 9 zeigen zwei weitere lösbare Spreizstifte,
Figur 10 zeigt ein weiteres Befestigungselement,
Figur 11 zeigt im Längsschnitt eine nicht-zylindrische Variante eines Befestigungselementes,
Figur 12 zeigt einen Schnitt des Elementes gemäss Figur 11, und
Figur 13 zeigt eine Ausführungsvariante zum Element von Figur 12.

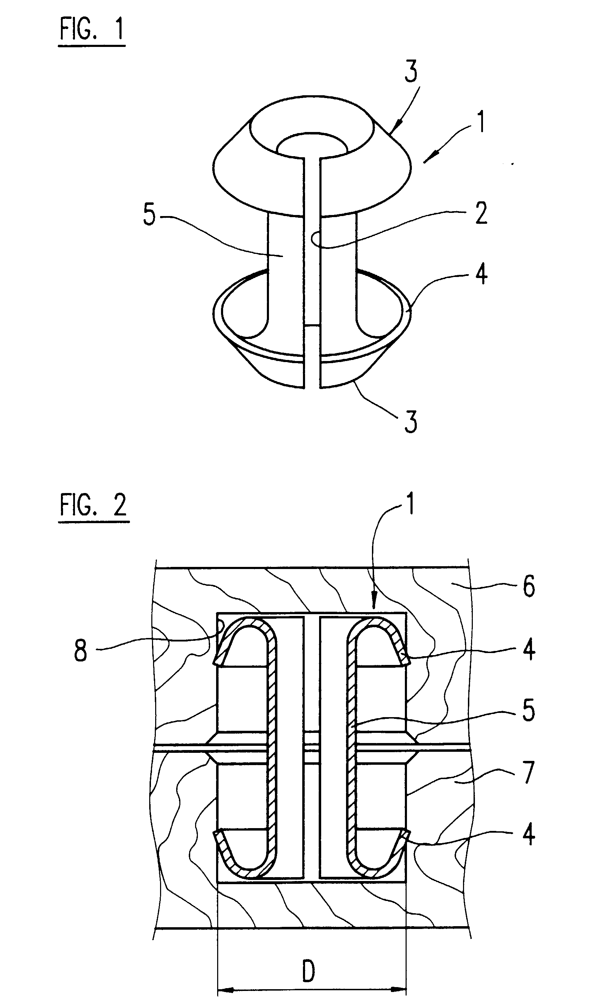

In Figur 1 ist ein erstes Ausführungsbeispiel eines Befestigungselementes dargestellt, wobei dieses Befestigungselement 1 als federnde Hülse ausgebildet ist und einen Längsschlitz 2 aufweist. Dieses Befestigungselement ist axial-symmetrisch ausgebildet und beide Stirnflächen 3 weisen einen nach aussen und unten U-förmig gebogenen Rand 4 auf, der von der zylindrischen Hülsenwand 5 absteht. Dadurch kann eine gute Klemm- und Rückhaltewirkung erhalten werden.

In Figur 2 ist eine einfache und wirkungsvolle Verbindungsanordnung zwischen zwei Teilen, beispielsweise zwei Holzplatten 6 und 7 dargestellt. Jede Platte weist ein Sackloch 8 auf, dessen Durchmesser D kleiner als der Durchmesser des umgebogenen Randes 4 des Befestigungselementes im unbenützten Zustand ist. Nach dem Einführen des Befestigungselementes in das Loch spreizt sich der gebogene Rand 4 und dringt in das Holz ein, wodurch eine gute Rückhaltewirkung erzielt wird. Bei genauer Dimensionierung der Löcher können die Platten spielfrei aufeinander befestigt werden. Selbstverständlich müssen die Platten oder Bretter nicht aus Holz bestehen, sondern können auch aus Kunststoff oder Verbundmaterialien gefertigt sein oder Spanplatten sein.

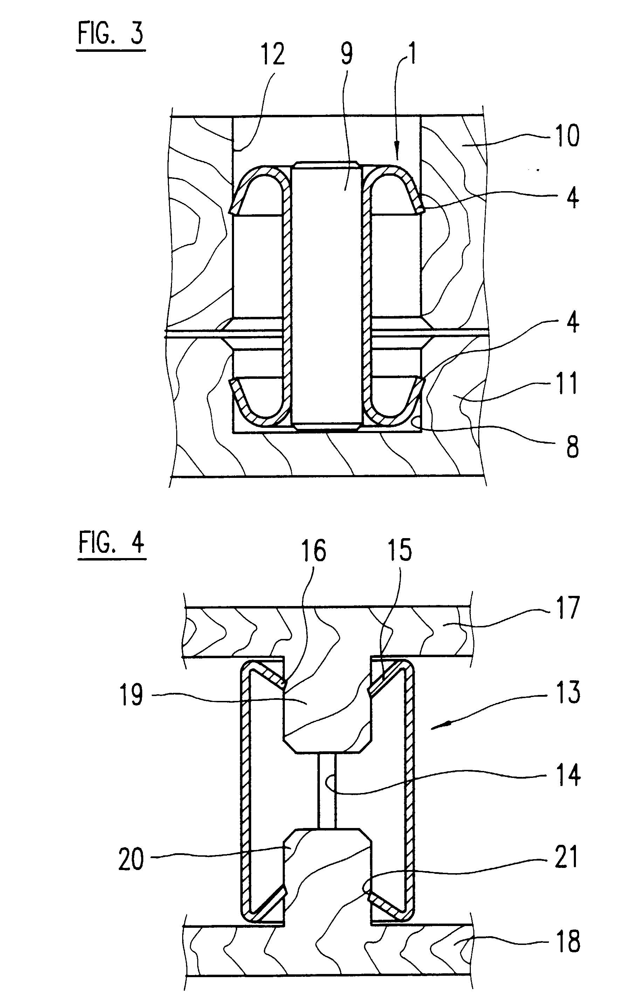

In Figur 3 ist eine weitere Montagemöglichkeit dargestellt, in der nicht mehr beide zu verbindende Teile Sacklöcher aufweisen sondern nur beispielsweise das untere Teil 10, während das obere Teil 11 eine nach oben offene Bohrung 12 aufweist. Die Bohrungen haben für das gleiche Befestigungselement den gleichen Durchmesser D wie beim ersten Ausführungsbeispiel. Nach dem Zusammenfügen der beiden Bauteile mit dem Befestigungselement 1 wird ein Blockierungsstift 9 in die Hülse eingepresst, um einerseits die Spreizung zu verstärken und andererseits das Lösen des Befestigungselementes zu verhindern.

Anstelle eines unabhängigen Blockierungsstiftes kann an einem, z. B. am oberen, Bauteil ein Zapfen angeordnet sein, der beim Zusammenfügen der Bauteile in die Bohrung des Befestigungselementes gestossen wird.

In einer Ausführungsvariante kann das Befestigungselement ein Innengewinde aufweisen, in welches der als Gewindebolzen ausgebildete Blockierungsstift eingeführt werden kann, wobei der Durchmesser des Gewindebolzens leicht grösser sein kann als der Innendurchmesser der Hülse.

In Figur 4 ist ein zweites Ausführungsbeispiel des Befestigungselementes 13 dargestellt, das ebenfalls als federnde Hülse ausgebildet ist und einen Längsschlitz 14 aufweist. Auch dieses Befestigungselement ist axial symmetrisch ausgeführt und weist zwei Stirnflächen 15 auf, die trichterförmig nach innen geformt sind. Die Stirnfläche ist jedoch nicht radial-symmetrisch ausgebildet sondern derart gestaltet, dass die Innenkante 16 der Stirnfläche ein gewindeähnliches Profil aufweist. Die beiden zu verbindenden Bauteile 17 und 18 weisen je einen Zapfen 19 und 20 auf, dessen Durchmesser etwas grösser als der Innendurchmesser 21 der Innenkante 16 der Stirnfläche ist, so dass beim Hineinpressen des Zapfens die Innenkante der Oeffnung zurückfedert und sich in den Zapfen hineinkrallt.

Da die Innenkante der Stirnfläche ein gewindeähnliches Profil aufweist ist es denkbar, das Befestigungselement auf einen Zapfen eines Bauteils zu befestigen und am anderen Ende des Befestigungselementes ein anderes Bauteils mittels einer Schraube zu befestigen, die in die Oeffnung 21, bzw. Gewinde-Innenkante 16 passt.

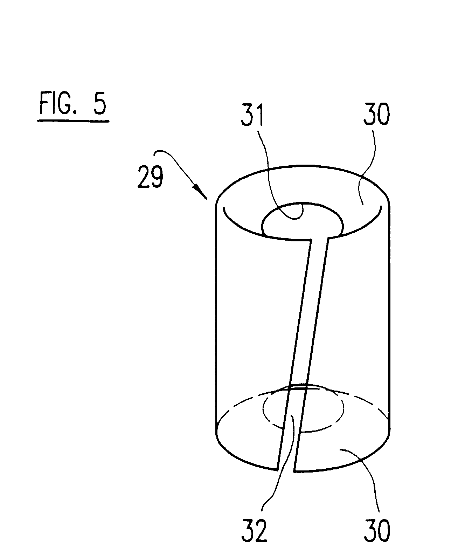

Die in Figur 5 gezeigte Ausführungsvariante des Befestigungselementes gemäss Figur 4 zeigt ein Befestigungselement 29 mit zwei nach innen trichterförmig zeigenden Stirnflächen 30 mit einer Innenkante 31, die ein gewindeähnliches Profil aufweisen. Hier verläuft der Längsschlitz 32 jedoch nicht im wesentlichen parallel zur Längsachse sondern schräg dazu. Dieses Befestigungselement kann gleich wie dasjenige gemäss Figur 4 verwendet werden.

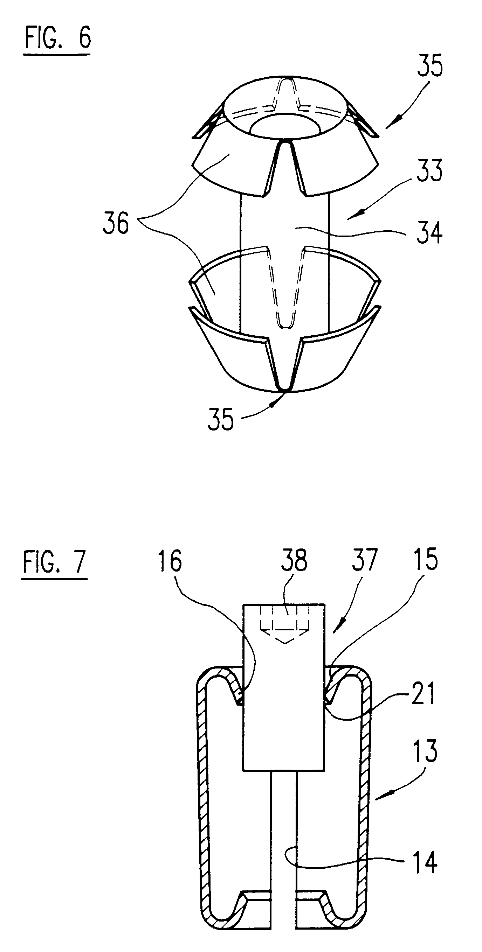

Das Befestigungselement 33 gemäss Figur 6 weist einen Zylindermantel 34 auf, doch sind die wie bei den Ausführungen gemäss den Figuren 1-3 nach aussen und unten U-förmig gebogenen Stirnflächen 35 aufgeschlitzt, um beispielsweise vier Flügel 36 zu bilden. Durch das Aufschlitzen der gebogenen Ränder wird ebenfalls eine radial federnde Elastizität wie bei den geschlitzten Zylinderwänden erreicht.

Figur 7 zeigt, wie ein Befestigungselement 13 gemäss Figur 4 mittels einem Spreizstift 37 aufgeweitet werden kann, um eine Verriegelung zu erzielen. Dabei kann das eine, z. B. das untere Bauteil über einen Zapfen mit dem Befestigungselement und das zweite Bauteil mittels dem Spreizstift mit dem Befestigungselement verbunden sein. Falls die Länge des Spreizstiftes kleiner als der kleinste Abstand der nach innen weisenden Stirnflächen des Befestigungselementes ist, kann der Stift vollständig in das Innere des Befestigungselementes gestossen werden, um so die Verriegelung aufzuheben. Zum besseren Handhaben des Spreizstiftes weist dieser an einem Ende einen Schlitz oder Innensechskant 38 oder dergleichen auf.

Diese Befestigungsart kann auch bei einem Befestigungselement gemäss Figur 5, resp. Figuren 12-14 angebracht sein und es können anstatt Stifte mit glatter Oberfläche Stifte 39 oder 40 verwendet werden, die entweder Rillen 41 oder ein Gewinde 42 aufweisen, um entweder eine bessere Retention oder ein Hinein- oder Hinausdrehen des Stiftes zu ermöglichen.

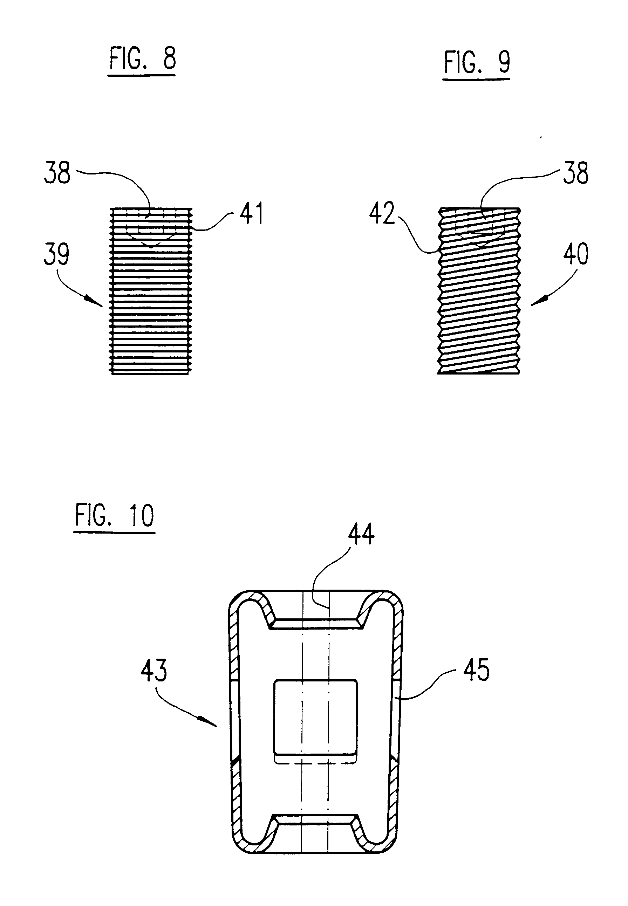

Das Element 43 mit Längsschlitz 44 gemäss Figur 10 weist ein oder mehrere Fenster 45 auf, in die entsprechende Vorsprünge in den Bauteilen ragen können, um eine zusätzliche Verriegelung zu bewirken. Im Uebrigen kann das Befestigungselement 43 wie eines gemäss Figur 4 ausgebildet sein.

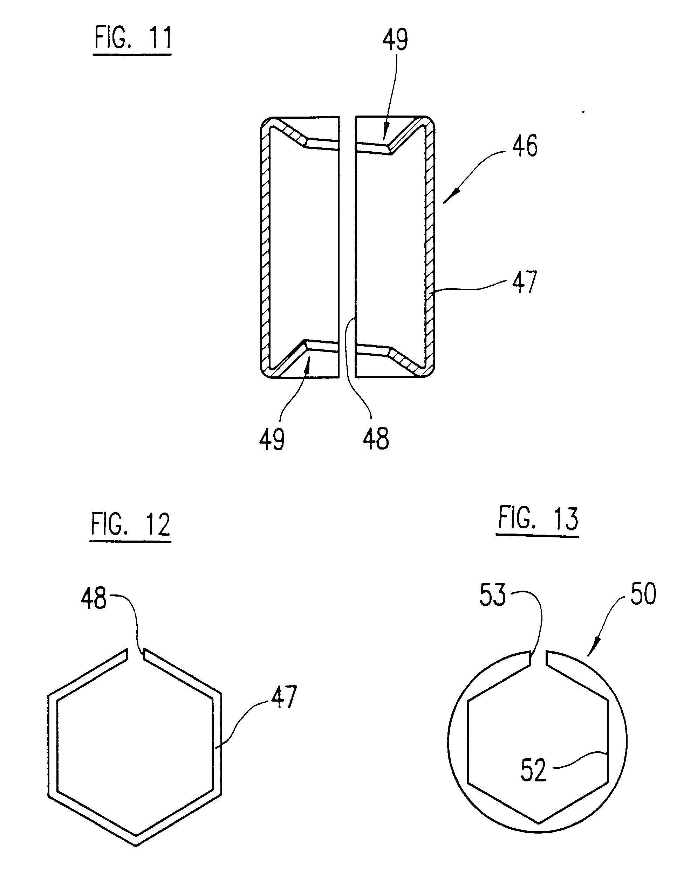

In Figur 11 ist eine Ausführungsvariante 46 eines Befestigungselementes vom Typ gemäss Figur 4 dargestellt, in dem der Hülsenmantel 47 nicht-zylindrisch sondern mehreckig ist, beispielsweise sechs-eckig wie im Schnitt von Figur 12 angedeutet. Der Längsschlitz 48 kann wie eingezeichnet parallel zur Längsachse verlaufen oder wie gemäss Figur 5 geneigt dazu. Die Stirnflächen 49 sind wie bei den anderen, ähnlichen Befestigungselementen ausgebildet.

In Figur 13 ist eine Variante 50 zum vorhergehenden Element angegeben, in der der Mantel 51 zwar zylindrisch ist, die Innenfläche 52 jedoch mehreckig, z.B. sechs-eckig ausgebildet ist, und ebenfalls einen Längsschlitz 53 aufweist. Dies kann auch für die Stirnflächen zutreffen.

Davon ausgehend lassen sich noch viele Variationen von Befestigungselementen angeben, indem die äusseren und inneren Formen, die Stirnflächen und die Rückhalteteile kombiniert werden und ebenso lassen sich, ausgehend von den gezeigten Teilen, noch eine Vielzahl von Bauteilen angeben mit Mitteln, die mit den Befestigungselementen zusammenarbeiten, um eine feste, entweder dauerhafte oder lösbare Verbindung zu bewirken.

## Patentansprüche

1. Verbindung, bestehend aus einem Befestigungselement (1, 13,22,29,43,46,50) und mehreren zu verbindenden Teilen (6, 7,10,11,17,18), wobei das Befestigungselement als radial federnde und mit einem Längsschlitz (2,14,32,48,53) versehene Hülse ausgebildet ist, dessen beide Enden mindestens je ein Rückhalteteil (4,16,31,36) aufweisen, wobei jedes der von der Hülsenwand abstehenden Rückhalteteile des nicht zum Anschweissen vorgesehenen Befestigungselements als Teil einer der beiden Stirnflächen (15,30,35,49) ausgebildet ist, dadurch gekennzeichnet, dass jedes der gegen die Zugrichtung gerichteten und nach aussen oder innen von der Hülsenwand (5, 25) abstehenden Rückhalteteile des für die feste Verbindung von zwei Teilen vorgesehenen Befestigungselements sich beim Befestigen radial gegen einen zylindrischen Oberflächenbereich eines der zu verbindenden Teile verklemmt.

2. Verbindung nach Anspruch 1, dadurch gekennzeichnet, dass das Rückhalteteil ringförmig ausgebildet ist.

3. Verbindung nach Anspruch 1 oder 2, dadurch gekennzeichnet, dass das Rückhalteteil eine nach aussen U-förmig gebogene Stirnfläche (3, 24; 35) mit Rand (4, 24; 36) ist.

4. Verbindung nach Anspruch 3, dadurch gekennzeichnet, dass das Profil der Hülsenwand eineinhalb-S-förmig ist, wobei der Durchmesser des Mittelteils (25) etwa gleich gross ist wie der Durchmesser der Bohrung (28) der zu verbindenden Teile.

5. Verbindung nach Anspruch 1, dadurch gekennzeichnet, dass das Rückhalteteil eine trichterförmig nach innen ausgebildete Stirnfläche (15, 30, 49) mit Innenkante (16, 31) hat.

6. Verbindung nach Anspruche 1 bis 5, dadurch gekennzeichnet, dass die Innenkante (16; 31) der Stirnfläche (3; 15; 30) ein gewindeähnliches Profil aufweist.

7. Verbindung nach einem der Ansprüche 1 bis 6, dadurch gekennzeichnet, dass der Längsschlitz (2, 14, 23, 44, 48; 32) parallel oder schräg zur Längsachse des Befestigungselementes verläuft.

8. Verbindung nach einem der Ansprüche 1 bis 7, dadurch gekennzeichnet, dass die aüßere Hülsenfläche (5, 34) zylindrisch ist.

9. Verbindung nach Anspruch 8, dadurch gekennzeichnet, dass seine Innenfläche (52) der Hülse mehreckig, insbesondere sechs-eckig ist.

10. Verbindung nach einem der Ansprüche 1 bis 7, dadurch gekennzeichnet, dass die Inneren und aüßeren Hülsenflächen (47) mehreckig, insbesondere sechs-eckig sind.

11. Verbindung nach Anspruch 1, dadurch gekennzeichnet, dass das Rückhalteteil (36) einen geschlitzten Rand (35) aufweist.

12. Verwendung der Verbindung nach einem der Ansprüche 1 bis 11, dadurch gekennzeichnet, dass die zu verbindenden Teile (6, 7; 10, 11; 17, 18; 26, 27) Bohrungen (8; 12; 28) oder Zapfen (19) aufweisen, um Befestigungselemente (1, 13, 22, 29, 33, 43, 46, 50) kraft- oder formschlüssig drehfest aufzunehmen, wobei ein Ende eines Befestigungselementes sich jeweils in je eine Bohrung verklemmt oder einen Zapfen eines der beiden zu verbindenden Bauteile fest aufnimmt.

13. Verwendung nach Anspruch 12 mit einer Verbindung nach einem der Ansprüche 1, 2, 5, 7, 8 oder 10, dadurch gekennzeichnet, dass die Bauteile (6, 7) Sacklöcher (8) aufweisen, um Befestigungselemente (1, 33) aufzunehmen.

14. Verwendung nach Anspruch 12 mit einer Verbindung nach einem der Ansprüche 1, 2, 5, 7, 8 oder 10, dadurch gekennzeichnet, dass die einen Bauteile (11) Sacklöcher (8) und die anderen Bauteile (10) durchgehende Bohrungen (12) aufweisen und die Befestigungselemente mit einem Blockierungsbolzen (9) oder Spreizstift (37, 39, 40) im Innern der Zylinderwand (5,34) versehen sind.

15. Verwendung nach Anspruch 14, dadurch gekennzeichnet, dass der Spreizstift (37, 39, 40) kürzer ist als der kleinste Abstand zwischen den Stirnflächen (15) des Befestigungselementes (13).

16. Verwendung nach Anspruch 15, dadurch gekennzeichnet, dass der Spreizstift entweder eine glatte, gerillte oder gewindeähnliche Aussenfläche hat.

17. Verwendung nach Anspruch 12 mit einer Verbindung nach einem der Ansprüche 4 oder 5, dadurch gekennzeichnet, dass die Zapfen (19) an den Bauteilen (17, 18) einen etwas grösseren Durchmesser aufweisen als die Innendurchmesser (21) des Befestigungselementes (13).

## Claims

1. Connection, consisting of a fastening element (1, 13, 22, 29, 43, 46, 50) and several parts (6, 7, 10, 11, 17, 18) which are to be connected, the fastening element being in the form of a radially resilient sleeve comprising a longitudinal slit (2, 14, 32, 48, 53), and each one of its ends being provided with at least one retaining portion (4, 16, 31, 36) which stand out from the sleeve wall and form a part of the two end faces (15, 30, 35, 49) of the fastening element which is not intended to be welded on, characterised in that each one of the retaining portions of the fastening element, which is intended for the rigid connection of two parts, is directed against the direction of tension and stands out inwardly or outwardly from the sleeve wall (5, 25) and is radially wedged against a cylindrical surface area of one of the parts to be connected in the course of the connection.

2. Connection according to claim 1, characterised in that the retaining portion has an annular configuration.

3. Connection according to claim 1 or 2, characterised in that the retaining portion is an end face (3, 24; 35) which is outwardly bent in the a 'U' shape and comprises a rim (4, 24; 36).

4. Connection according to claim 3, characterised in that the profile of the sleeve wall has the shape of one 'S' and a half, the diameter of the central portion (25) being approximately equal to the diameter of the bore (28) of the parts to be connected.

5. Connection according to claim 1, characterised in that the retaining portion comprises an end face (15, 30, 49) which is hopper-shaped towards the interior and comprises an internal edge (16, 31).

6. Connection according to one of claims 1 to 5, characterised in that the internal edge (16; 31) of the end face (3; 15; 30) has a thread-like profile.

7. Connection according to one of claims 1 to 6, characterised in that the longitudinal slit (2, 14, 23, 44, 48; 32) is parallel or inclined with respect to the longitudinal axis of the fastening element.

8. Connection according to one of claims 1 to 7, characterised in that the external sleeve surface (5, 34) is cylindrical.

9. Connection according to claim 8, characterised in that the internal surface (52) of the sleeve is polygonal, more particularly hexagonal.

10. Connection according to one of claims 1 to 7, characterised in that the internal and external sleeve surfaces (47) are polygonal, more particularly hexagonal.

11. Connection according to claim 1, characterised in that the retaining portion (36) comprises a slitted rim (35).

12. Use of the connection according to one of claims 1 to 11, characterised in that the parts to be connected (6, 7; 10, 11; 17, 18; 26, 27) comprise bores (8; 12; 28) or posts (19) in order to receive fastening elements (1, 13, 22, 29, 33, 43, 46, 50) in a frictional or positive and rotationally secured manner, the respective ends of a fastening element being wedged in a bore, or rigidly retaining a post, of one of the two components to be connected.

13. Use according to claim 12 with a connection according to one of claims 1, 2, 5, 7, 8, or 10, characterised in that the components (6, 7) comprise blind holes (8) in order to receive fastening elements (1, 33).

14. Use according to claim 12 with a connection according to one of claims 1, 2, 5, 7, 8, or 10, characterised in that one kind of components (11) comprises blind bores (8) and the other kind of components (10) comprises through-going bores (12), and in that the fastening elements are provided with a locking pin (9) or with a spreader pin (37, 39, 40) on the inside of the cylinder wall (5, 34).

15. Use according to claim 14, characterised in that the spreader pin (37, 39, 40) is shorter than the smallest distance between the end faces (15) of the fastening element (13).

16. Use according to claim 15, characterised in that the spreader pin comprises either a smooth, a grooved, or a thread-like external surface.

17. Use according to claim 12 with a connection according to one of claims 4 or 5, characterised in that the posts (19) of the components (17, 18) have a somewhat greater diameter than the internal diameter (21) of the fastening element (13).

## Revendications

1. Connexion, consistant d'un élément de fixation (1, 13, 22, 29, 43, 46, 50) et de plusieurs éléments constructifs (6, 7, 10, 11, 17, 18) connectés, l'élément de fixation étant réalisé sous forme d'une douille radialement élastique avec fente longitudinale (2, 14, 32, 48, 53) dont les deux extrémités présentent au moins un élément de retenue (4, 16, 31, 36) chacune, chacun des éléments de retenue en saillie de la paroi de la douille faisant partie d'une des deux faces (15, 30, 35, 49) de l'élément de fixation qui n'est pas destiné au soudage, caractérisée en ce que chacun des éléments de retenue, qui sont opposés à la direction de traction et intérieurement ou extérieurement en saillie de la paroi de la douille (5, 25) de l'élément de fixation prévu pour la fixation rigide de deux éléments constructifs, se coince radialement contre une partie superficielle cylindrique d'un des éléments constructifs connectés.

2. Connexion selon la revendication 1, caractérisée en ce que l'élément de retenue est réalisé sous forme annulaire.

3. Connexion selon la revendication 1 ou 2, caractérisée en ce que l'élément de retenue est une face (3, 24; 35) repliée vers l'extérieur en forme de U qui comporte un bord (4, 24; 36).

4. Connexion selon la revendication 3, caractérisée en ce que le profil de la paroi de la douille présente la forme d'un S et demi, le diamètre de la partie centrale (25) étant approximativement égal au diamètre de l'alésage (28) des éléments constructifs connectés.

5. Connexion selon la revendication 1, caractérisée en ce que l'élément de retenue présente une face (15, 30, 49) qui s'étend vers l'intérieur en entonnoir et comporte une arête intérieure (16, 31).

6. Connexion selon l'une des revendications 1 à 5, caractérisée en ce que l'arête intérieure (16; 31) de la face (3; 15; 30) présente un profil similaire à un taraudage.

7. Connexion selon l'une des revendications 1 à 6, caractérisée en ce que la fente longitudinale (2, 14, 23, 44, 48; 32) est parallèle ou oblique par rapport à l'axe longitudinal de l'élément de fixation.

8. Connexion selon l'une des revendications 1 à 7, caractérisée en ce que la surface extérieure (5, 34) de la douille est cylindrique.

9. Connexion selon la revendication 8, caractérisée en ce que la surface intérieure (52) de la douille est polygonale, plus particulièrement hexagonale.

10. Connexion selon l'une des revendications 1 à 7, caractérisée en ce que les surfaces intérieures et extérieures (47) de la douille sont polygonales, plus particulièrement hexagonales.

11. Connexion selon la revendication 1, caractérisée en ce que l'élément de retenue (36) présente un bord fendu (35).

12. Utilisation de la connexion selon l'une des revendications 1 à 11, caractérisée en ce que les éléments constructifs connectés (6, 7; 10, 11; 17, 18; 26, 27) présentent des alésages (8; 12; 28) ou des poteaux (19) afin de bloquer en rotation par adhérence ou par engagement positif des éléments de fixation (1, 13, 22, 29, 33, 43, 46, 50) dont les extrémités se coincent dans un alésage ou immobilisent un poteau d'un des deux éléments constructifs connectés.

13. Utilisation selon la revendication 12 avec une connexion selon l'une des revendications 1, 2, 5, 7, 8 ou 10, caractérisée en ce que les éléments constructifs (6, 7) présentent des trous borgnes (8) pour recevoir des éléments de fixation (1, 33).

14. Utilisation selon la revendication 12 avec une connexion selon l'une des revendications 1, 2, 5, 7, 8 ou 10, caractérisée en ce qu'un type d'éléments constructifs (11) présente des trous borgnes (8) et l'autre type d'éléments constructifs (10) présente des alésages traversants (12), et que les éléments de fixation sont munis d'une cheville de blocage (9) ou d'une broche d'écartement (37, 39, 40) à l'intérieur de la paroi cylindrique (5, 34).

15. Utilisation selon la revendication 14, caractérisée en ce que la broche d'écartement (37, 39, 40) est plus courte que la distance minimale entre les faces (15) de l'élément de fixation (13).

16. Utilisation selon la revendication 15, caractérisée en ce que la broche d'écartement présente une surface extérieure qui est lisse, cannelée ou en forme de filetage.

17. Utilisation selon la revendication 12 avec une connexion selon l'une des revendications 4 ou 5, caractérisée en ce que les poteaux (19) des éléments constructifs (17, 18) présentent un diamètre légèrement supérieur au diamètre intérieur (21) de l'élément de fixation (13).
